# EUROPÄISCHE PATENTSCHRIFT

(11) **EP 0 604 468 B1**
(45) Veröffentlichungstag und Bekanntmachung des Hinweises auf die Patenterteilung: **19.11.1997**
(21) Anmeldenummer: 92918211.1
(22) Anmeldetag: 27.08.1992
(51) Int. Cl.: G01N 27/407, G01N 27/417

(54) **ABGASSENSOR**
EXHAUST GAS SENSOR
CAPTEUR DE GAZ D'ECHAPPEMENT

(30) Priorität: 21.09.1991 DE 4131503
(43) Veröffentlichungstag der Anmeldung: 06.07.1994
(73) Patentinhaber: ROBERT BOSCH GMBH, 70442 Stuttgart (DE)
(72) Erfinder: FRIESE, Karl-Hermann, D-7250 Leonberg (DE); WEYL, Helmut, D-7141 Schwieberdingen (DE); WIEDENMANN, Hans-Martin, D-7000 Stuttgart 1 (DE)
(86) Internationale Anmeldenummer: DE9200714
(87) Internationale Veröffentlichungsnummer: WO9306472

(56) Entgegenhaltungen:
- EP-A- 0 159 905
- EP-A- 0 369 238
- US-A- 4 272 349
- Patent Abstracts of Japan, Band 11, Nr 186, P586, Zusammenfassung von JP 62- 14055
- Patent Abstracts of Japan, Band 13, Nr 524, P964, Zusammenfassung von JP 1- 213567
- 213567, publ 1989-08-28

## Beschreibung

### Stand der Technik

Die Erfindung geht aus von einem Abgassensor nach der Gattung des Hauptanspruchs. Es sind zum Beispiel aus der DE-A 22 65 309 bereits Abgassensoren, insbesondere Lambdasonden, bekannt, mit einer die Meßelektrode bedeckenden porösen Schicht aus einem die Einstellung des Gasgleichgewichtes katalysierenden Material, wobei diese Schicht zum Beispiel auch eine katalytisch inaktive, poröse Keramikschicht sein kann, die fein verteilte Edelmetalle enthält. Diese Edelmetalle, insbesondere aus der Platingruppe, wirken als Getter, das heißt als Fangstoffe für Schadstoffe aus dem Abgas, wie zum Beispiel Blei, Silizium, Phosphor, Zink, die die Elektrodenfunktion beeinträchtigen könnten. Gleichzeitig katalysieren sie die Einstellung des thermodynamischen Gleichgewichtes und legen somit die Sensor-Regellage in der Nähe des stöchiometrischen Punktes, das heißt bei λ = 1, fest.

In der DE-A 26 56 648 ist dargelegt, auf einer hitzebeständigen und porösen ersten Elektrodenschutzschicht eine Schicht metallischer Katalysatoren aufzutragen, die wiederum durch eine zweite gasdurchlässige Schutzschicht bedeckt ist.

Aus der JP-A 1-213567 ist weiterhin bekannt, die Meßelektroden mit einer ersten, mit katalytisch wirkendem Platin bedeckten Schicht zu bedecken. Diese ist von einer Platinschicht überzogen, die wiederum durch eine zweite keramische Schicht vor korrosiven Einflüssen des Abgases geschützt ist.

Bei dem in der EP-A 369 238 beschriebenen Sauerstoffsensor ist eine mit Getterstoffen versehene zweite poröse Schicht über der Meßelektrode direkt dem Abgas ausgesetzt. Die erste, der Meßelektrode unmittelbar benachbarte Schicht ist mit katalytisch wirksamen Stoffen versehen.

Allen diesen Dokumenten ist jedoch gemein, daß die zweite poröse Schicht, bzw. die zweite Schutzschicht nicht zu einer Einstellung der Regellage eines Abgassensors benützt werden können.

Weiterhin wurden bereits eine Vielzahl der Elemente des Periodensystems sowie ihre Oxide als Getter für Schadstoffe aus dem Abgas vorgeschlagen. Beispielsweise wird in der DE-A 40 33 388 die Verwendung von Mischoxiden aus wenigstens einem Alkalimetalloxid einerseits und einem thermisch stabilen Oxid eines Elements mit der Wertigkeit mindestens drei, vorzugsweise aus den Gruppen IIIa, IIIb oder IVb, beschrieben. Getterstoffe auf Nichtedelmetall-Basis sind jedoch insbesondere bei niedrigen und mittleren Anwendungstemperaturen, zwischen etwa 300 und 600° C, nicht ausreichend reaktiv. In diesem Temperaturbereich ist die Schadstoffbelastung besonders hoch, weil sich die Schadstoffe niederschlagen können, wogegen sie bei hohen Temperaturen mit dem Meßgas ausgetragen werden.

Für niedrige und mittlere Anwendungstemperaturen müssen daher hochreaktive Gettersubstanzen, auf Edelmetallbasis, eingesetzt werden. Damit ist jedoch der Nachteil verbunden, daß die Sensor-Regellage auf den stöchiometrischen Punkt festgelegt und somit nicht mehr gezielt einstellbar ist.

### Vorteile der Erfindung

Aufgabe der Erfindung ist es, gleichzeitig den Schutz des Meßelements eines Abgassensors gegenüber Schadstoffen bei niedrigen und mittleren Anwendungstemperaturen zu gewährleisten und die Sensor-Regellage an die jeweilige Applikation angepaßt einzustellen, insbesondere zur Optimierung von Motorleistung, Kraftstoffverbrauch, Umsetzungsrate des Katalysators usw. Diese Aufgabe wird durch einen Abgassensor mit den Merkmalen des Hauptanspruchs gelöst.

Besonders vorteilhaft ist es, Gettersubstanzen auf der Basis von Edelmetallen, Edelmetalloxiden oder Edelmetallegierungen einzusetzen, weil diese auch bei niedrigen und mittleren Anwendungstemperaturen, im Bereich von etwa 300 bis 600° C, hochreaktiv gegenüber Schadstoffen aus dem Abgas sind.

Die Sensor-Regellage kann in vorteilhafter Weise über die Schichtstärke und/oder Porenstruktur der vorgelagerten, dem Abgas zugewandten Schicht(-en) eingestellt werden. Weiterhin kann die Regellage zusätzlich mit gezielt in die dem Abgas zugewandte(n) Schicht(-en) eingebrachtem Katalysatormaterial beeinflußt werden.

In vorteilhafter Weise kann die dem Abgas zugewandte Schicht, die zur Einstellung der Regellage dient, eine Schutzschicht gegen erosive und korrosive Einflüsse aus dem Abgas tragen, die ebenfalls Getterstoffe auf Nichtedelmetall-Basis enthalten kann.

Durch thermische Behandlung der mit Edelmetallösungen oder -suspensionen imprägnierten keramischen Schicht kann die feindisperse Verteilung auf den Porenwandungen der Schutzschicht und damit die Reaktivität des Gettermaterials verbessert werden.

### Zeichnung

Ausführungsbeispiele der Erfindung sind in der Zeichnung dargestellt und in der nachfolgenden Beschreibung näher erläutert.
Es zeigen:
Figur 1 einen Schnitt durch einen erfindungsgemäßen Abgassensor, der als Lambdasonde ausgebildet ist und
Figur 2 einen Schnitt durch einen Abgassensor, der als Festkörpersensor ausgebildet ist.

### Beschreibung der Ausführungsbeispiele

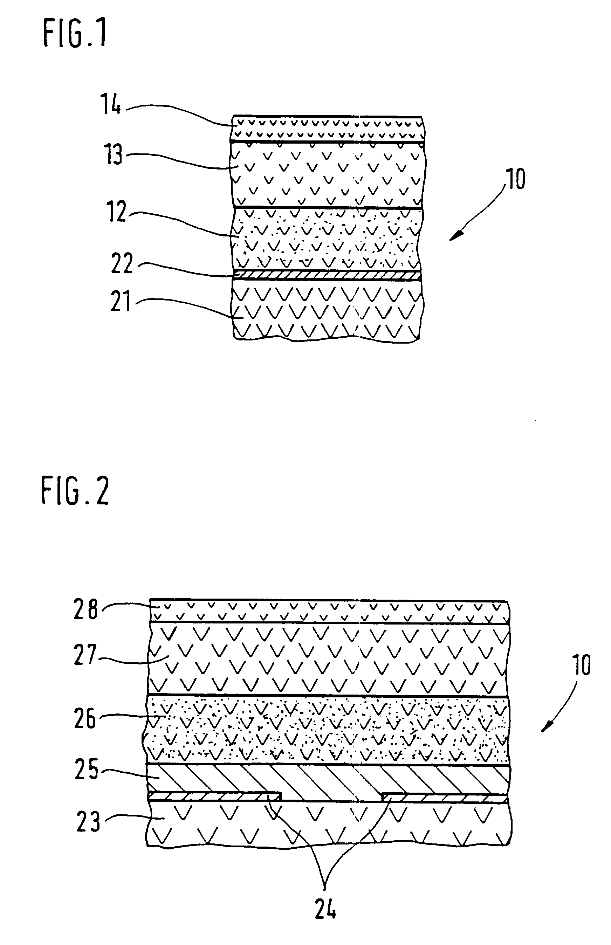

Ein erster Ausführungsbeispiel der Erfindung ist in Figur 1 schematisch dargestellt. Es betrifft eine Lambdasonde, das heißt einen Sauerstoffsensor nach dem Prinzip der galvanischen Sauerstoffkonzentrationszelle mit Festelektrolyt. Auf dem Festelektrolyt 21 aus mit Yttriumoxid stabilisiertem Zirkoniumdioxid befindet sich eine Edelmetall- oder Edelmetall-Cermet-Meßelektrode 22, gemäß DE-OS 28 52 638, und auf der gegenüberliegenden Seite eine nicht dargestellte Vergleichselektrode, die zusammen das eigentliche Meßelement bilden. An der Dreiphasengrenze Festelektrolyt-Elektrode-Meßgas findet die abgasseitigen Elektrodenreaktion statt. Auf der Meßelektrode 22 befindet sich eine erste keramische Schicht 12 mit feindispers verteilten Getterstoffen, insbesondere auf Edelmetall-basis. Abgasseitig schließt sich eine zweite poröse keramische Schicht 13 an, die zur Einstellung der Sensor-Regellage dient. Die Schicht 13 kann abgasseitig eine Schutzschicht 14 tragen.

Zur Herstellung des erfindungsgemäßen Abgassensors geht man zum Beispiel von einem vorgesinterten Zirkoniumdioxid-Plättchen von 0,6 bis 0,8 mm Dicke als Festelektrolyt 21 aus, und bringt durch an sich bekannte Verfahren Edelmetall- oder Edelmetall-Cermet-Elektroden von 5 bis 15 µm, vorzugsweise 10 µm Dicke auf. Auf die Meßelektrode 22 wird nun in bekannter Weise, zum Beispiel entsprechend der DE-OS 28 52 647 eine 80 bis 120 µm, vorzugsweise 100 µm dicke Engobeschicht als erste keramische Schicht 12 aufgetragen, zum Beispiel durch Besprühen oder durch Eintauchen in einen Keramikschlicker, der feindispers verteiltes Platin-Pulver mit einer Korngröße von vorzugsweise unter 1 µm mit einem Anteil von vorteilhaft größer als 0,5 Gew.%, vorzugsweise von 3 Gew.% enthält. Das Schichtsystem wird getrocknet und bei Temperaturen im Bereich von 1400 bis 1500, vorzugsweise bei 1450° C gesintert.

Die keramische Schicht 12 kann auch ohne Edelmetallzusatz aufgetragen und aufgesintert werden und daran anschließend mit zum Beispiel 4%iger wässrigen Pt-Hexachlorid-Lösung imprägniert und bei 200° C in Luft getrocknet werden.

Anschließend wird eine 80 bis 120 µm, vorzugsweise 100 µm dicke Magnesium-Spinellschicht als zweite keramische Schicht 13 in Plasmaspritztechnik aufgebracht. Die nunmehr fertiggestellte Beschichtung wird im Bereich von 500 bis 950°C, insbesondere bei 900° C im Abgas eines Propangasbrenners thermisch nachbehandelt.

In vorteilhafter Weise kann die zweite keramische Schicht 13 zur Einstellung der Sensor-Regellage mit einer 0,14%-igen Rhodium-Chlorid-Lösung imprägniert werden.

Bei einer Variante des Verfahrens wird nach dem Imprägnieren der ersten keramischen Schicht 12 im Temperaturbereich von 950 bis 1050° C, vorzugsweise bei 1000° C in Luft getempert. Eine weitere Variante sieht vor, die Temperung in feuchtem Formiergas (90 % N₂/10 % H ₂) vorzunehmen.

Zur Imprägnierung der ersten keramischen Schicht 12 kann weiterhin das Platin-Hexachlorid durch eine 2%ige Rhodium-Chlorid-Lösung ersetzt werden. Auch bei dieser Variante kann im Temperaturbereich von 950 bis 1050° C, vorzugsweise bei 1000° C in Luft getempert werden.

Gemäß einer weiteren Variante wird der mit Elektroden beschichtete Festelektrolyt 2 fertiggesintert und anstelle der Engobeschicht als erste keramische Schicht 12 eine Spinellbeschichtung aufgebracht, wobei das weitere Verfahren dem eingangs beschriebenen entspricht.

Auf die Einstellung der Regellage dienenden zweite keramische Schicht 13 kann eine Schutzschicht 14 aufgebracht werden, die Getterstoffe auf Nichtedelmetall-Basis, zum Beispiel nach DE-OS 40 33 388 enthalten kann.

Schließlich kann die zur Imprägnierung der ersten keramischen Schicht 12 verwendete Platin-Hexachlorid-Lösung zusätzlich wasserlösliche Aluminiumsalze und Lithiumsalze enthalten, wobei vorzugsweise ein Al₂O₃-/Li₂O-Mol-Verhältnis von 1 : 1 eingestellt wird.

Die Erfindung ist jedoch nicht auf Lambdasonden nach dem potentiometrischen (Nernst-)bzw. amperometrischen (Grenzstrom-)Prinzip begrenzt, sondern betrifft gleichermaßen sogenannte Festkörper-Gassensoren, das heißt Abgassensoren, deren Festkörpereigenschaften sich in Abhängigkeit der Konzentration einer oder mehreren Abgaskomponenten ändern. Darunter sind insbesondere die Widerstandssensoren zu verstehen, zum Beispiel auf TiO₂- oder SnO₂-Basis, sowie auch sogenannte Halbleiter-Gassensoren, insbesondere auf Si-Basis.

Figur 2 ist eine schematische Schnittdarstellung durch einen Widerstandssensor, der auf einem isolierenden Substrat 23 Elektroden 24 sowie das eigentliche Meßelement, das in diesem Teil eine Widerstandsschicht 25, zum Beispiel auf TiO₂- oder SnO₂-Basis ist, aufweist. Auf der Widerstandsschicht 25 sitzt wiederum eine erste keramische Schicht 26 mit Getterwirkung und eine zweite, abgasseitige keramische Schicht 27, die zur Einstellung der Sensor-Regellage dient.

Die erfindungsgemäßen Abgassensoren weisen somit eine zumindest zweilagige keramische Beschichtung 12, 13, 26, 27 auf, mit einer direkt auf das gassensitive Meßelement aufgebrachten ersten keramischen Schicht, der eine Getterfunktion gegenüber Schadstoffen aus dem Abgas zukommt, insbesondere bei niedrigen und mittleren Anwendungstemperaturen, wo sich Schadstoffe besonders intensiv niederschlagen können und nicht wieder vom Meßgas ausgetragen werden. Die Beschichtung weist zwingend zumindest eine abgasseitig angeordnete weitere keramische Schicht auf, über die die Sensor-Regellage eingestellt werden kann. Diese zweite keramische Schicht 13, 27 kann abgasseitig eine bei hohen Anwendungstemperaturen wirksame Getter-Schutzschicht 14, 28 tragen.

Abgassensoren mit der mindestens zweilagigen Beschichtung auf der Meßelektrode erreichen eine gegenüber herkömmlichen Sensoren verbesserte Abgasgüte. Im Silizium-Vergiftungstest, der mit im Kraftstoff löslichen Si-organischen Verbindungen, bei einer Si-Konzentration von 85 mgSi/l Kraftstoff durchgeführt wurde, wurden die in der nachfolgenden Tabelle angegebenen Abgaswerte für CO und NOₓ erhalten. Silizium kann als Verunreinigung in das Kfz-Abgas aus dem Motoröl oder aus Silikon-Dichtungen (zum Beispiel Zylinderkopf) bzw. aus Silikonbeschichtungen gelangen. Weitere bekannte Schadstoffe in Kfz-Abgasen sind zum Beispiel Zink und Phosphor (aus dem Öl) sowie Blei (aus dem Kraftstoff).

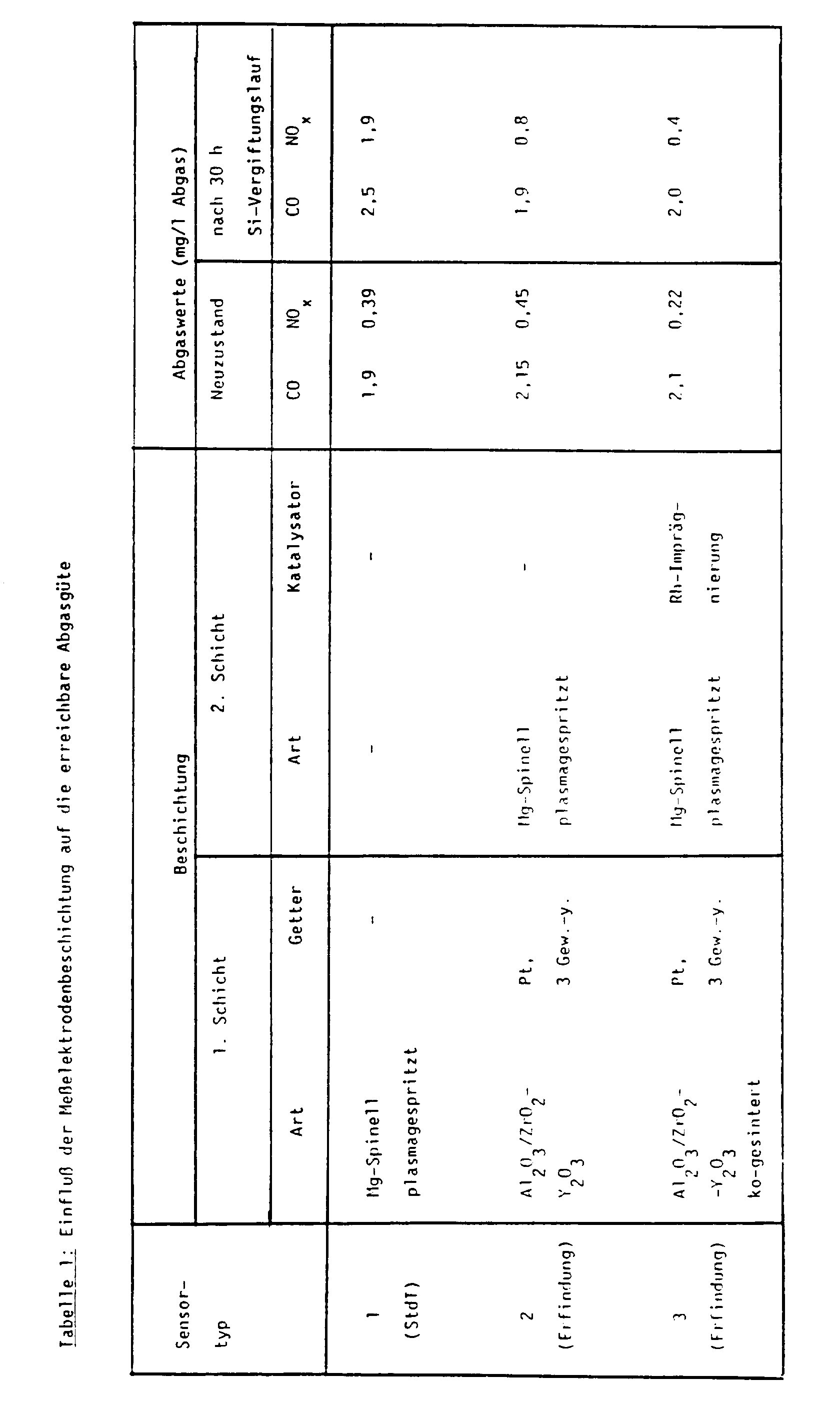

Wie aus Tabelle 1 ersichtlich, verschlechtern sich die Abgaswerte für Sensoren nach dem Stand der Technik (Sensortyp 1) im Dauerbetrieb (Testbedingungen: 30 Std. Silizium-Vergiftungslauf) erheblich gegenüber dem Neuzustand, insbesondere verschlechtert sich der NOₓ-Wert deutlich. Wird jedoch die Meßelektrode, wie erfindungsgemäß vorgeschlagen (Sensortyp 2), mit einer mindestens zweilagigen Beschichtung versehen, wobei eine erste Schicht als Getter und eine zweite, dem Abgas zugewandte Schicht, zur Einstellung der Sensor-Regellage dient, so werden wesentlich bessere Abgaswerte im Dauerlauf erreicht: Im Versuch wurde ein gegenüber dem Neuzustand nahezu unveränderter CO-Wert ermittelt, während beim NOₓ -Wert die Verschlechterung wesentlich unter dem entsprechenden Wert für den Sensortyp 1 lag.

Eine weitere Verbesserung der erreichbaren Abgasgüte kann erfindungsgemäß durch die Imprägnierung der zweiten, dem Abgas zugewandten Schicht, mit Katalysatoren, die zur Einstellung der Regellage dienen, zum Beispiel Rhodium, erreicht werden (Sensortyp 3). Diese Abgaswerte des erfindungsgemäßen Sensors sind nach 30h-Si-Vergiftungslauf immer noch annähernd so gut wie die des Sensors nach dem Stand der Technik im Neuzustand.

Die Funktion der erfindungsgemäßen, zumindest zweilagigen Beschichtung der Meßelektrode kann aufgrund folgender Überlegungen erklärt werden: Eine Schutzschicht mit feinverteilten Getterstoffen, wie sie in bekannter Weise zum Schutz gegenüber Schadstoffen aus dem Abgas, die die Elektrodenfunktion beeinträchtigen könnten, aufgebracht wird, wirkt als Diffusionsbarriere für die gasförmigen Komponenten des Abgases. Da sich jedoch die Abgaskomponenten erheblich in ihren Diffusionskoeffizienten unterscheiden (vgl. Tabelle 2), bewirkt diese Diffusionsbarriere eine Veränderung der relativen Konzentration der Abgaskomponenten an der Meßelektrode im Vergleich zum Abgas: Der wesentlich schneller diffundierende Wasserstoff wird an der Meßelektrode ein fetteres Gemisch vortäuschen, als es tatsächlich im Abgas vorliegt, oder anders ausgedrückt, wird die Meßelektrode ein stöchiometrisches Luft/Kraftstoff-Verhältnis (λ = 1) erst dann anzeigen, wenn im Abgas tatsächlich ein Sauerstoffüberschuß, das heißt, ein mageres Gemisch vorliegt.

Tabelle 2: Vergleich der Diffusionskoeffizienten der wichtigsten Kfz-Abgaskomponenten im Temperaturbereich von 400° bis 800° C (relative Werte):

| Abgaskomponente | Diffusionskoeffizient |
|---|---|
| H₂ | 100 (als Bezugsgröße) |
| O₂ | 13,5 |
| NO | 11 |
| CO | 12 |
| C₃H₈ | 4,5 |

Diese "Magerverschiebung" der Regellage infolge der unterschiedlichen Diffusionsgeschwindigkeiten der einzelnen Abgaskomponenten wird nun erfindungsgemäß durch eine zweite, abgasseitig vorgelagerte Schicht gezielt auf die jeweilige Applikation eingestellt und zwar durch Einstellung von Porengröße und Schichtdicke der zweiten Schicht, beziehungsweise, in vorteilhafter Weise, durch Imprägnieren der zweiten Schicht mit einem Vorkatalysator, zum Beispiel Rhodium. Durch die Vorkatalyse reagieren die Abgaskomponenten bereits weitgehend ab, bevor sie die als Diffusionsbarriere wirkende Beschichtung durchqueren.

## Patentansprüche

1. Abgassensor mit einem Meßelement (22, 25), das eine zumindest zweilagige poröse keramische Beschichtung (12, 13, 26, 27) trägt, wobei auf dem Meßelement eine erste poröse keramische Schicht (12, 26) und auf der ersten Schicht (12, 26) zumindest eine zweite poröse keramische Schicht (13, 27), die unmittelbar dem Abgas ausgesetzt ist, angeordnet sind, dadurch gekennzeichnet, daß die mindestens zwei Schichten so ausgestaltet sind, daß die erste Schicht (12, 26) Gettersubstanzen zur Entfernung von für das Meßelement (22, 25) schädlichen Stoffen enthält und daß die zweite Schicht (13, 27) einen Diffusionswiderstand und/oder eine katalytische Wirkung bezüglich der Gasbestandteile aufweist, derart, daß an der darunterliegenden ersten Schicht (12, 26) bereits eine bestimmte, die Regellage einstellende Zusammensetzung von oxidierbaren und/oder reduzierbaren Gasbestandteilen vorliegt.

2. Abgassensor nach Anspruch 1, dadurch gekennzeichnet, daß das Meßelement ein Festelektrolytsensor mit mindestens einer gassensitiven Meßelektrode (22) ist.

3. Abgassensor nach Anspruch 1, dadurch gekennzeichnet, daß das Meßelement ein Widerstandssensor mit einer die Festkörpereigenschaften in Abhängigkeit der Konzentration von Gasbestandteilen sich ändernden Widerstandsschicht (25) ist.

4. Abgassensor nach Anspruch 1, dadurch gekennzeichnet, daß die erste Schicht (12, 26) als Gettersubstanz ein oder mehrere Edelmetalle, Edelmetalloxide und/oder Edelmetallegierungen aufweist.

5. Abgassensor nach Anspruch 1, dadurch gekennzeichnet, daß zur Einstellung des thermodynamischen Gleichgewichts die zweite Schicht (13, 27) mindestens ein Katalysatormaterial enthält.

## Claims

1. Exhaust gas sensor having a measuring element (22, 25) which supports an at least two-layer porous ceramic coating (12, 13, 26, 27), a first porous ceramic layer (12, 26) being arranged on the measuring element, and at least a second porous ceramic layer (13, 27), which is directly exposed to the exhaust gas, being arranged on the first layer (12, 26), characterized in that the at least two layers are configured in such a way that the first layer (12, 26) contains getter substances for removing materials which are damaging to the measuring element (22, 25), and the second layer (13, 27) has a diffusion resistance and/or a catalytic action with respect to the gas components, such that, on the underlying first layer (12, 26) there is already a determined composition, which sets the control state, of oxidizable and/or reducible gas components.

2. Exhaust gas sensor according to Claim 1, characterized in that the measuring element is a solid electrolyte sensor with at least one gas-sensitive measuring electrode (22).

3. Exhaust gas sensor according to Claim 1, characterized in that the measuring element is a resistive sensor with a resistive layer (25) whose solid-state properties change as a function of the concentration of gas components.

4. Exhaust gas sensor according to Claim 1, characterized in that the first layer (12, 26) has one or more noble metals, noble metal oxides and/or noble metal alloys as getter substance.

5. Exhaust gas sensor according to Claim 1, characterized in that, in order to set up thermodynamic equilibrium, the second layer (13, 27) contains at least one catalyst material.

## Revendications

1. Capteur de gaz d'échappement comprenant un élément de mesure (22, 25) portant au moins une enduction céramique poreux à deux couches (12, 13, 26, 27), l'élément de mesure ayant une première couche céramique poreuse (12, 26) et sur cette première couche (12, 26) au moins une seconde couche céramique poreuse (13, 27) directement exposée aux gaz d'échappement,
caractérisé en ce que
au moins les deux couches sont réalisées pour que la première couche (12, 26) contienne des produits formant pièges pour éliminer les matières nocives pour l'élément de mesure (22, 25) et la seconde couche (13, 27) présente une résistance de diffusion et/ou un effet catalytique vis-à-vis des composants des gaz de manière qu'au niveau de la première couche sous-jacente (12, 26), on dispose déjà d'une certaine composition, réglant la position de régulation pour les composants oxydables et/ou réductibles contenus dans les gaz d'échappement.

2. Capteur de gaz d'échappement selon la revendication 1,
caractérisé en ce que
l'élément de mesure est un capteur à électrolyte solide avec au moins une électrode de mesure (22) sensible aux gaz.

3. Capteur de gaz d'échappement selon la revendication 1,
caractérisé en ce que
l'élément de mesure est un capteur résistant avec une couche résistante (27) qui modifie les propriétés des corps solides en fonction de la concentration des composants des gaz d'échappement.

4. Capteur de gaz d'échappement selon la revendication 1,
caractérisé en ce que
la première couche (12, 26) présente comme substance formant piège un ou plusieurs métaux nobles, des oxydes de métaux nobles et/ou des alliages de métaux nobles.

5. Capteur de gaz d'échappement selon la revendication 1,
caractérisé en ce que
la seconde couche (13, 27) ccntient au moins un catalyseur pour régler l'équilibre thermcdynamique.
